(19) Europäisches Patentamt
European Patent Office
Office européen des brevets

(11) **EP 1 795 881 B1**

(12) **EUROPÄISCHE PATENTSCHRIFT**

(45) Veröffentlichungstag und Bekanntmachung des Hinweises auf die Patenterteilung:
**24.06.2009 Patentblatt 2009/26**

(51) Int Cl.:
*G01M 17/02* (2006.01)  *B60C 23/06* (2006.01)
*G01L 5/16* (2006.01)  *B60T 8/172* (2006.01)
*G01N 19/02* (2006.01)

(21) Anmeldenummer: **05111517.8**

(22) Anmeldetag: **30.11.2005**

(54) **Verfahren und Vorrichtung zur Abschätzung des Betriebszustandes eines Fahrzeugreifens**

Method and device for estimating the operating condition of a vehicle tyre

Procédé et dispositif à l'évaluation de l'état de fonctionnement d'un pneu de véhicule

(84) Benannte Vertragsstaaten:
**DE FR GB**

(43) Veröffentlichungstag der Anmeldung:
**13.06.2007 Patentblatt 2007/24**

(73) Patentinhaber: **Ford Global Technologies, LLC
Dearborn, MI 48126 (US)**

(72) Erfinder:
- **Arndt, Christoph
57583 Moerlen (DE)**
- **Gussen, Uwe
52393 Huertgenwald (DE)**

(74) Vertreter: **Drömer, Hans-Carsten et al
Ford-Werke Aktiengesellschaft
Patentabteilung NH/DRP
Henry-Ford-Strasse 1
50725 Köln (DE)**

(56) Entgegenhaltungen:
| | |
|---|---|
| EP-A- 1 516 794 | EP-A- 1 568 518 |
| WO-A-01/08908 | DE-A1- 3 937 966 |
| DE-A1- 10 318 168 | DE-A1- 10 329 700 |
| US-A- 5 546 070 | US-A- 5 749 984 |
| US-A1- 2004 112 128 | US-A1- 2004 158 441 |
| US-A1- 2005 033 486 | US-A1- 2005 044 945 |
| US-A1- 2005 057 346 | US-A1- 2005 075 825 |
| US-A1- 2005 080 587 | US-A1- 2005 097 949 |
| US-A1- 2005 103 100 | US-A1- 2005 204 806 |
| US-B1- 6 668 666 | |

**Beschreibung**

Die vorliegende Erfindung betrifft ein Verfahren und eine Vorrichtung zur Abschätzung des Betriebszustandes eines Fahrzeugreifens.

Bekanntermaßen ist bei der Bestimmung und Steuerung des dynamischen Verhaltens eines Kraftfahrzeuges auch die Kenntnis und Überwachung des Zustandes der Fahrzeugreifen von großer Bedeutung. Allgemein kann mit dieser Kenntnis unter anderem eine effektivere Reduzierung des Signalrauschens in den die Fahrzeugdynamik betreffenden Messergebnissen, eine bessere Abschätzung von weiteren (z.B. nicht der direkten Messung zugänglichen) Fahrzeugeigenschaften sowie eine zuverlässigere Steuerung von Maßnahmen zur Einhaltung des stabilen Fahrverhaltens des Fahrzeuges erreicht werden.

Im Stand der Technik sind diverse Lösungen etwa zur Überwachung des Reifendruckes oder der zwischen Reifen und Fahrbahn vorliegenden Kraftschlussverhältnisse bekannt.

Aus DE 39 37 966 A1 sind ein Verfahren und eine Vorrichtung zur Bestimmung der Kraftschlussverhältnisse zwischen Fahrzeugreifen und Fahrbahn bekannt. Hierbei werden mittels eines im Laufstreifen eingebetteten Sensors, der z.B. als ein mit mehreren Dehnungsmessstreifen bestückter Verformungskörper ausgebildet ist und Messsignale an eine Auswerteeinrichtung liefert, die Verläufe der lokalen Spannungen in zur Fahrbahn horizontaler Richtung und in Normalrichtung beim Durchlaufen der Berührungsfläche zwischen Reifen und Fahrbahn erfasst und zur Bestimmung sowohl des derzeitigen als auch des maximal möglichen Kraftschlussbeiwertes (d. h. des Rollwiderstandsbeiwertes) ausgewertet, indem aus der Messung an mehreren Messstellen im Reifen auf die örtlich in der Kontaktstelle vorliegenden Verhältnisse geschlossen wird.

Aus DE 43 29 591 C2 ist eine Vorrichtung zur Überwachung des Fülldruckes eines Reifens bei Kraftfahrzeugen bekannt, bei der ein z. B. als Piezoelement ausgebildeter Sensor einen der Verformung des Reifens bei einem Latschdurchlauf entsprechenden elektrischen Impuls ausgibt und eine Auswerteeinheit das Ausmaß der Verformung etwa in Abhängigkeit von der Höhe der Amplitude oder auch in Abhängigkeit von der Dauer des Impulses zur Dauer einer Radumdrehung ermittelt.

Aus DE 103 29 700 A1 sind ein Verfahren und eine Vorrichtung zur Vermittlung des Reifenfülldruckes und der Radlast eines Fahrzeugreifens bekannt, wobei der gesuchte Reifenfülldruck und die Radlast direkt mit Hilfe der ermittelten Latschlänge und einer Sensorspannung mittels funktionaler Zusammenhänge ermittelt werden.

US 2005/0097949 A1 offenbart ein System zum Überwachen eines luftbereiften Fahrzeuges, wobei aus den Ausgangssignalen eines Verformungssensors durch frequenzabhängige Auswertung ein der statischen Belastung des Reifens entsprechendes Signal und ein der Fahrbahnbeschaffenheit entsprechendes Signal hergeleitet werden.

US 2004/0112128 A1 offenbart eine Reifensensorik zur kontinuierlichen Messung der übertragenen Kraft und des Reibwertpotenzials, wobei die Reifensensorik aus einer Vielzahl von an der äußeren Umfangsfläche des Reifens angeordneten Sensoren besteht.

WO 01/08908 A1 offenbart ein Verfahren und eine Vorrichtung zur Steuerung des Fahrzeugverhaltens bei Überwachung des Reifenzustandes, wobei einzelne für die Deformation charakteristische Parameter bestimmt und mit vorbestimmten Werten dieser Parameter verglichen werden.

US 2005/0057346 A1 offenbart eine Reifenzustandsgrößenerfassungsvorrichtung mit einer im Reifen eingebetteten Erfassungseinrichtung in Form eines Verformungssensors und einem zwischen Reifen und Erfassungseinrichtung angeordneten Verringerungsmechanismus zur dynamischen Verringerung der Verförmungsgröße der Erfassungseinrichtung gegenüber der Verformungsgröße des Reifens.

US 2004/0158441 A1 offenbart ein Verfahren zur Bestimmung charakteristischer Merkmale eines Reifens unter Verwendung neuronaler Netzwerke.

US 2005/0075825 A1 offenbart eine Vorrichtung zur Echtzeit-Signalverarbeitung zur Reifenüberwachung auf Basis einer Messung der Pulsdauer.

US 5,749,984 offenbart ein Reifenüberwachungssystem, bei welchem die Länge der Reifenkontaktfläche relativ zum Gesamtumfang des Reifens ermittelt wird.

Es ist Aufgabe der vorliegenden Erfindung, ein Verfahren und eine Vorrichtung zur Abschätzung des Betriebszustandes eines Fahrzeugreifens bereitzustellen, welche in vergleichsweise einfacher Weise eine umfassende Beurteilung zur verbesserten Bestimmung und Steuerung des dynamischen Fahrzeugverhaltens ermöglichen.

Diese Aufgabe wird durch ein Verfahren gemäß den Merkmalen des unabhängigen Patentanspruches 1 bzw. eine Vorrichtung gemäß den Merkmalen des unabhängigen Patentanspruches 8 gelöst.

Bei dem erfindungsgemäßen Verfahren wird ein in einem Abschnitt des Fahrzeugreifens angebrachter Sensor verwendet, welcher ein von einer Deformation des Fahrzeugreifens abhängiges Deformationssignal wiederholt an eine Auswerteeinrichtung übermittelt, wobei dieses Deformationssignal durch die Auswerteeinrichtung zeitabhängig ausgewertet wird. Das Verfahren weist einen ersten Signalverarbeitungsschritt, bei dem aus dem zeitlichen Verlauf des Deformationssignals eine erste Größe bestimmt wird, die für den Fülldruck in dem Fahrzeugreifen und/oder dessen Veränderung charakteristisch ist, und einen zweiten Signalverarbeitungsschritt auf, bei dem aus dem zeitlichen Verlauf des Deformationssignals eine zweite Größe bestimmt wird, die für den Rollwiderstandsbeiwert zwischen dem Fahrzeugreifen und der Fahrbahn und/oder dessen Veränderung charakteristisch ist.

Das Verfahren ist dadurch gekennzeichnet, dass vor Durchführung des ersten und des zweiten Signalverarbeitungsschrittes ein Referenzsignal des Sensors bestimmt wird, wobei die Auswertung des Deformationssignals durch die Auswerteeinrichtung die Bestimmung eines Korrelationssignals aus dem Deformationssignal und dem Referenzsignal umfasst.

Im Rahmen der vorliegenden Erfindung wird somit der zeitliche Verlauf des Deformationssignals in zwei voneinander verschiedenen und voneinander unabhängigen, separaten Signalauswertungsschritten analysiert, um einerseits einen Rückschluss auf den Fülldruck und andererseits auch einen Rückschluss auf den Rollwiderstand $F_r$ bzw. den Rollwiderstandsbeiwert $\mu_r$ durchzuführen. Dabei wird erfindungsgemäß ausgenutzt, dass - wie nachfolgend detaillierter erläutert - unterschiedliche Bereiche auf der Zeitskala der von dem Sensor übermittelten Deforrriationssignale für diese Rückschlüsse herangezogen werden können, so dass letztlich mittels eines verhältnismäßig einfachen Aufbaus eine umfassende Beurteilung des Betriebszustandes und darauf basierend eine verbesserte Steuerung des dynamischen Fahrzeugverhaltens ermöglicht wird. Das Verfahren kann mit Standard-Verfahren der Signalauswertung wie der signalangepassten Filterung ("matched filtering") erfolgen und somit einfach und kostengünstig implementiert werden.

Unter Rollwiderstand (auch Rollreibung genannt) wird hier und im Folgenden die zwischen einem rollenden Körper (z.B. Fahrzeugreifen) und dessen Unterlage (z. B. Fahrbahn) wirkende und den rollenden Körper abbremsende Kraft verstanden, welche beim Fahrzeugreifen durch eine Vielzahl von Faktoren wie z.B. die Werkstoffmischung des Reifens, das Reifenprofil, den Reifenfülldruck, den Fahrbahnbelag und die auf der Fahrbahn herrschenden Bedingungen (z.B. Nässe) beeinflusst wird und durch die Formel

$$F_r = \mu_r * F_N \qquad (1)$$

definiert ist, wobei $\mu_r$ den Rollwiderstandsbeiwert (auch Rollreibungsbeiwert, Rollreibungszahl oder Rollwiderstandskoeffizient genannt) und $F_N$ die Normalkraft (die bei horizontaler Bewegung gleich der Gewichtskraft auf den rollenden Körper ist, so dass dann $F_N = m * g$ mit m= Fahrzeugmasse und g= Erdbeschleunigung gilt) bezeichnen.

Die Erfindung betrifft ferner eine Vorrichtung zur Abschätzung des Betriebszustandes eines Fahrzeugreifens an einem Fahrzeug, mit wenigstens einem in einem Abschnitt des Fahrzeugreifens angebrachten Sensor und einer Auswerteeinrichtung, wobei ein von dem Sensor wiederholt an die Auswerteeinrichtung übermitteltes und von einer Deformation des Fahrzeugreifens abhängiges Deformationssignal durch die Auswerteeinrichtung zeitabhängig auswertbar ist, wobei die Auswerteeinrichtung ein signalangepasstes Filter aufweist, welches dazu ausgelegt ist, mittels einer Faltung des Deformationssignals mit einem Referenzsignal des Sensors ein Korrelationssignal zu erzeugen..

Weitere Ausgestaltungen der Erfindung sind der Beschreibung sowie den Unteransprüchen zu entnehmen.

Die Erfindung wird nachstehend anhand einer bevorzugten Ausführungsform unter Bezugnahme auf die beigefügten Abbildungen erläutert.

Es zeigen:

Figuren 1a-c jeweils eine schematische Perspektivansicht zur Erläuterung des erfindungsgemäßen Verfahrens bzw. der Vorrichtung;

Figuren 2a-d Diagramme zur Erläuterung des Zustandekommens von mittels des erfindungsgemäßen Verfahrens ausgewerteten Deformationssignalen;

Figur 3 ein Blockdiagramm zur Erläuterung der Auswertungsschritte des erfindungsgemäßen Verfahrens; und

Figur 4a-b den zeitlichen Verlauf des mittels des erfindungsgemäßen Verfahrens ausgewerteten Ausgangssignals in typischen Situationen einer Abnahme des Fülldruckes (Figur 4a) bzw. einer Änderung des Rollwiderstandsbeiwertes (Figur 4b).

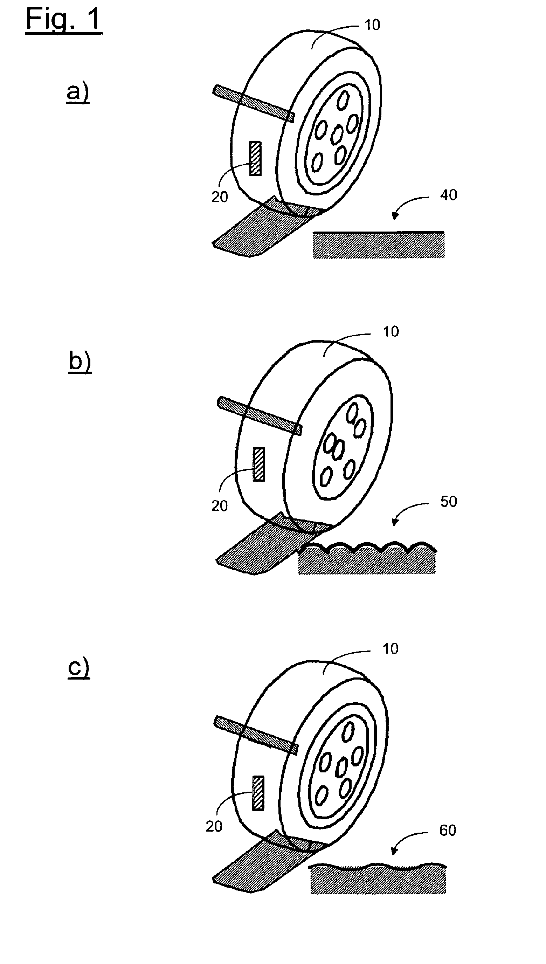

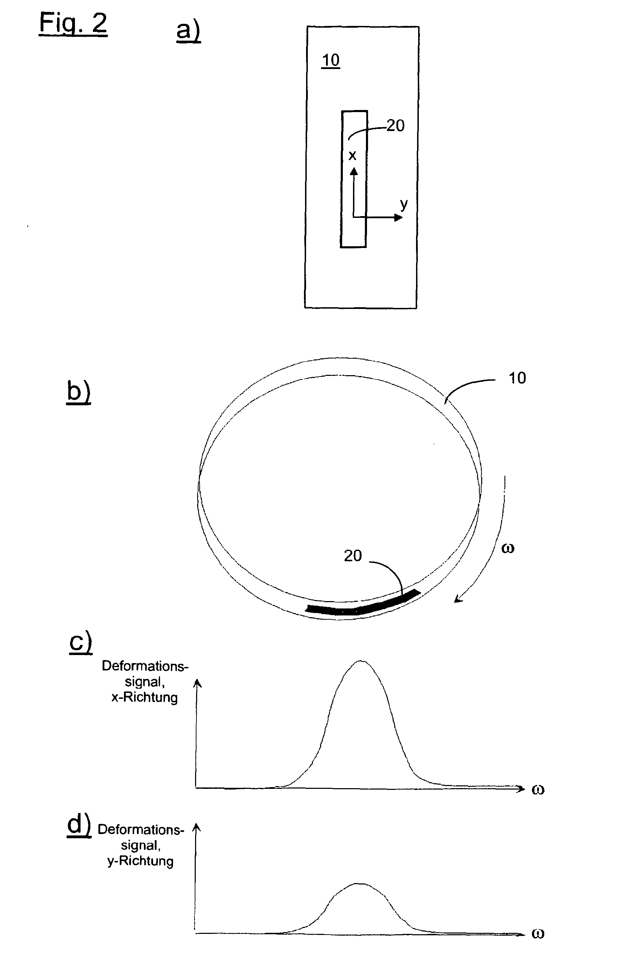

Erfindungsgemäß ist gemäß Fig. 1a-c und Fig. 2a in einem Abschnitt eines Fahrzeugreifens 10 ein Sensor in Form eines Dehnungsmessstreifens 20 angebracht. Eine Deformation des Fahrzeugreifens 10 im Bereich des Abschnitts, in welchem der Dehnungsmessstreifen 20 angebracht ist, hat eine Änderung des elektrischen Widerstandes des Dehnungsmessstreifens 20 zur Folge. Das mittels des Dehnungsmessstreifens 20 erfasste und von der Deformation des Fahrzeugreifens 10 abhängige Signal wird drahtlos (induktiv oder kapazitiv) an eine am Fahrzeug vorgesehene Auswerteeinrichtung übermittelt, welche diese Signale zeitabhängig auswertet, wie nachfolgend detaillierter erläutert wird.

Wie in Fig. 2a bis Fig. 2d dargestellt, führt die Rotation des Fahrzeugreifens 10 zu einem typischen vom Dehnungsmessstreifen 20 erzeugten Deformationssignal, wenn der Fahrzeugreifen 10 im Bereich des Abschnitts die Fahrbahn berührt, in welchem der Dehnungsmessstreifen 20 angebracht ist, Dabei ergeben sich beispielsweise für den gemäß Fig. 2a und 2b dargestellten rechteckförmigen Dehnungsmessstreifen unterschiedliche Deformationssignale in Umfangsrichtung (Längsrichtung des Dehnungsmessstreifens, x-Richtung) und in hierzu senkrechter Richtung (y-Richtung). Diese Deformationssignale treten während jeder Rotation des Fahrzeugreifens 10 auf, wobei Variationen des jeweiligen Deformationssignals S_D zum Nachweis von Änderungen der Kontaktfläche zwischen Fahrzeugreifen 10 und Fahrbahn herangezogen werden können. Diese Kontaktfläche ist sowohl in ihrer Größe als auch in ihrer Form abhängig von der auf den Reifen wirkenden Last, dem Haftungskoeffizienten und dem Reifendruck. Soweit im Folgenden von dem vom Dehnungsmessstreifen 20 erzeugten Deformationssignal S_D die Rede ist, kann als dieses Deformationssignal sowohl das in Umfangsrichtung (x-Richtung) gemäß Fig. 2c ermittelte Signal als auch das in hierzu senkrechter Richtung (y-Richtung) gemäß Fig. 2d ermittelte Signal verwendet werden.

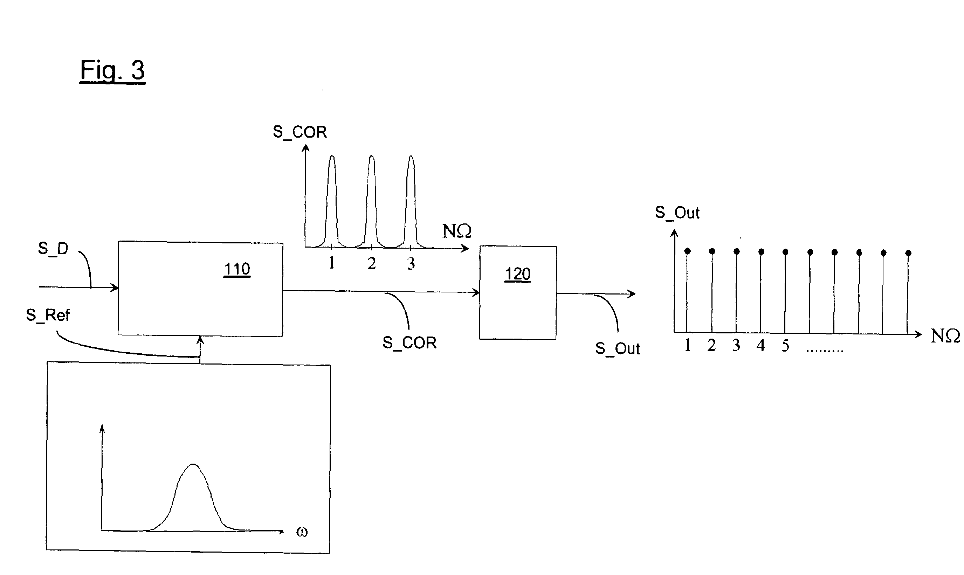

Zur quantitativen Auswertung des zeitlichen Verlaufes des von dem Dehnungsmessstreifen 20 übermittelten Deformationssignals wird erfindungsgemäß zunächst ein Referenzsignal S_Ref des Dehnungsmessstreifens 20 (d.h. ein Sensorsignal für z.B. einen als optimal angesehenen Fülldruck und für einen Referenz-Rollwiderstandsbeiwert) bestimmt. Dieses Referenzsignal S_Ref wird gemäß Fig. 3 zeitinvertiert einem signalangepassten Filter 110 zugeführt. Sodann wird in der Folgezeit das vom Dehnungsmessstreifen 20 im jeweiligen Betriebszustand des Fahrzeugreifens 10 erzeugte Deformationssignal S_D wiederholt dem signalangepassten Filter 110 zugeführt, welches eine Faltung dieses Deformationssignals S_D mit dem Referenzsignal S_Ref durchführt und so ein Korrelationssignal S_COR erzeugt, dessen schematischer Signalverlauf in Fig. 3 für eine Mehrzahl von Umdrehungsperioden $N\Omega$ des Fahrzeugreifens 10 dargestellt ist. Dieses Korrelationssignal S_COR wird einer weiteren Signalverarbeitungseinheit (Block 120) zugeführt, welche zu einer Folge von Signalimpulsen jeweils die zu den Signalimpulsen gehörige Amplitude bestimmt und als Ausgangssignal S_Out ausgibt. Die in diesem Ausgangssignal S_Out enthaltene, in Fig. 3 ebenfalls über eine Mehrzahl von Umdrehungsperioden $N\Omega$ des Fahrzeugreifens 10 schematisch dargestellte Amplitudensequenz hängt nicht nur von der Amplitude des vom Dehnungsmessstreifen 20 erzeugten Deformationssignal S_D ab, sondern von der gesamtem Signalform, d.h. der Amplitude, der Länge und der Energie der in dem Deformationssignal S_D enthaltenen Signalimpulse. Infolgedessen wird also eine Deformation des Dehnungsmessstreifens 20, da sie eine Änderung der Signalform des Deformationssignals S_D zur Folge hat, in eine entsprechende Änderung der Größe der Amplituden im Ausgangssignal S_Out transformiert.

Deformationen des Dehnungsmessstreifens 20 treten sowohl bei einer Änderung des Reifenfülldrucks als auch bei einer Änderung des Rollwiderstandes $F_r$ bzw. des Rollwiderstandsbeiwertes $\mu_r$ auf. Erfindungsgemäß wird nun ausgenutzt, dass diese beiden Effekte der Fülldruckänderung einerseits und der Rollwiderstandsbeiwertänderung andererseits in unterschiedlichen Bereichen auf der Zeitskala der von dem Dehnungsmessstreifen 20 übermittelten Signale auftreten. Der zeitliche Verlauf des von dem Dehnungsmessstreifen 20 übermittelten Signals wird erfindungsgemäß in zwei voneinander verschiedenen und voneinander unabhängigen, separaten Signalauswertungsschritten analysiert, um einerseits einen Rückschluss auf den Fülldruck und andererseits auch einen Rückschluss auf den Rollwiderstand $F_r$ bzw. den Rollwiderstandsbeiwert $\mu_r$ durchzuführen.

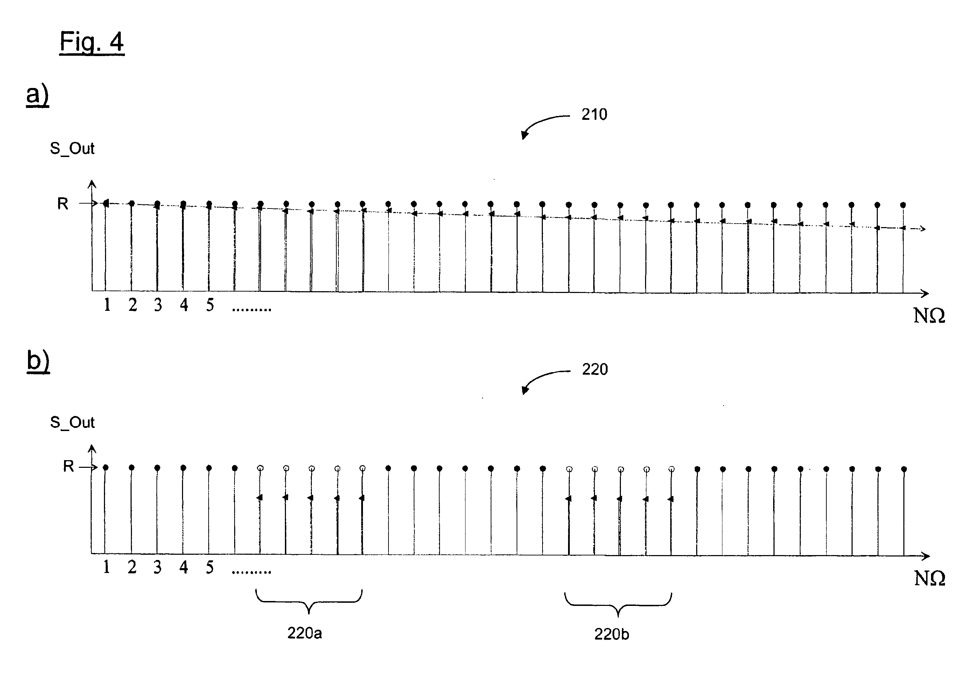

In Fig. 4a ist der zeitliche Verlauf des Ausgangssignals S_Out für den Fall dargestellt, dass der Fülldruck in dem Fahrzeugreifen 10 abnimmt. Diese Abnahme des Fülldrucks führt über die fortschreitende Deformation des Dehnungsmessstreifens 20 zu einer fortschreitenden Änderung der Form des Deformationssignals S_D, wohingegen das Referenzsignal S_Ref konstant bleibt. Da das Ausgangssignal S_Out aus dem Deformationssignal S_D und dem Referenzsignal S_Ref erzeugt wird, ergibt sich eine fortschreitende Abnahme der Größe der Amplituden im Ausgangssignal S_Out, wie in Fig. 4a aus dem Vergleich der tatsächlichen für das Ausgangssignal S_Out erhaltenen Werte (durch geschlossene Dreiecke dargestellt) mit den Werten des Ausgangssignals, die sich bei Übereinstimmung des Deformationssignals S_D mit dem Referenzsignal S_Ref ergeben würden und mittels geschlossener Kreise dargestellt sind, deutlich erkennbar ist.

Der Prozesse der Abnahme des Fülldrucks ist somit gekennzeichnet durch eine langfristige Änderung ("Drift") des Ausgangssignals S_Out, welche mittels Auswertung des zeitlichen Mittelwertes dieses Ausgangssignal S_Out bestimmt werden kann. , Diese zeitliche Mittelung erfolgt vorzugsweise über eine Vielzahl von Umdrehungsperioden des Fahrzeugreifens 10, damit z.B. Änderungen vorübergehender Natur aufgrund einer Erwärmung des Reifens beispielsweise auf heißer Fahrbahn oder aufgrund der jeweiligen Fahrbedingungen unberücksichtigt bleiben. Zugleich sollte die Zeitkonstante nicht zu groß gewählt werden, damit auch ein vergleichsweise schnell erfolgender Druckverlust (etwa infolge eines Reifenlecks) erfasst werden kann.

Der erste Signalverarbeitungsschritt kann alternativ durch Mittelwertbildung des Sensorsignals über eine (für aufeinander folgende Auswertungen) immer gleich große zurückliegende Zeitspanne oder auch durch Mittelwertbildung über eine (von einem gleich bleibenden Anfangszeitpunkt) für aufeinander folgende Auswertungen wachsende Zeitspanne erfolgen.

Ferner wird beim Abrollen des Fahrzeugreifens 10 auf der Fahrbahn der Fahrzeugreifen 10 deformiert, wobei eine Variation dieser Deformation wiederum einen Rückschluss auf die Veränderung des Rollwiderstandes $F_r$ bzw. des Rollwiderstandsbeiwertes $\mu_r$ erlaubt. Was diese Variation der Deformation des Fahrzeugreifens 10 infolge einer Veränderung des Rollwiderstandes $F_r$ bzw. des Rollwiderstandsbeiwertes $\mu_r$ betrifft, so ergibt diese jeweils eine charakteristische Stufenstruktur in dem zeitlichen Verlauf des Ausgangssignals S_Out, wobei diese Stufen in solchen Zeitperioden auftreten, in denen der Abschnitt des Fahrzeugreifens 10, in welchem der Dehnungsmessstreifen 20 angebracht ist, in Kontakt mit der Fahrbahn ist. Diese charakteristische Struktur variiert insbesondere mit dem Fahrbahnbelag bzw. den auf der Fahrbahn herrschenden Bedingungen, wie sie in Fig.1a bis 1c schematisch anhand der Beispiele einer eisbedeckten Fahrbahn 40 (Fig. 1a), einem gepflasterten Fahrbahnbelag 50 (Fig. 1b) und einem asphaltierten Fahrbahnbelag 60 (Fig. 1 c) veranschaulicht sind.

In Fig. 4b ist ein typischer zeitabhängiger Verlauf 220 des Ausgangssignals S_Out für den Fall gezeigt, dass der auf der Fahrbahn vorliegende aktuelle Rollwiderstandsbeiwert $\mu_r$ von dem dem Referenzsignal zugrunde liegenden Wert abweicht. Die Werte des Ausgangssignals im Falle einer Übereinstimmung des Deformationssignals S_D mit dem Referenzsignal S_Ref sind in Fig. 4b mittels offener Symbole (offene Kreise) dargestellt, wohingegen das tatsächliche Ausgangssignal S_Out mittels geschlossener Symbole (geschlossene Kreise bzw. geschlossene Dreiecke) dargestellt ist. Der geänderte Rollwiderstandsbeiwert äußert sich nun darin, dass Stufen in dem Verlauf des Ausgangssignals S_Out auftreten, wenn sich der Fahrzeugreifen 10 im Bereich des Abschnitts, in welchem der Dehnungsmessstreifen 20 angebracht ist, in Kontakt mit der Fahrbahn befindet, wobei diese Zeitperioden in Fig. 4b mit 220a, 220b bezeichnet sind. In diesen Stufen ist das Ausgangssignal mittels geschlossener Dreiecke S_Out bezeichnet. In den übrigen Bereichen ist das Ausgangssignal mittels geschlossener Kreise bezeichnet und stimmt dort mit den Werten des Ausgangssignals, die sich bei Übereinstimmung des Deformationssignals S_D mit dem Referenzsignal S_Ref ergeben würden, überein. Diese Änderungen im Rollwiderstandsbeiwert sind in dem Ausgangssignal zu unterscheiden von anderen vorübergehenden Einflüssen wie beispielsweise der Erwärmung des Reifens auf heißer Fahrbahn, die sich in einer kontinuierlichen Ab- bzw. Zunahme (Drift) in dem Ausgangssignal auf kurzer Zeitskala äußern.

Erfindungsgemäß kann insbesondere eine Online-Auswertung durchgeführt und während der Fahrt beliebig oft wiederholt werden, indem die tatsächlichen Ausgangssignale S_Out mit den Werten des Ausgangssignals, die sich bei Übereinstimmung des Deformationssignals S_D mit dem Referenzsignal S_Ref ergeben würden, wiederholt verglichen werden.

**Patentansprüche**

1. Verfahren zur Abschätzung des Betriebszustandes eines Fahrzeugreifens an einem Fahrzeug, wobei wenigstens ein in einem Abschnitt des Fahrzeugreifens (10) angebrachter Sensor (20) ein von einer Deformation des Fahrzeugreifens (10) abhängiges Deformationssignal (S_D) wiederholt an eine Auswerteeinrichtung übermittelt und wobei dieses Deformationssignal (S_D) durch die Auswerteeinrichtung zeitabhängig ausgewertet wird, wobei das Verfahren aufweist:

einen ersten Signalverarbeitungsschritt, bei dem aus dem Deformationssignal (S_D) eine erste Größe bestimmt wird, die für den Fülldruck in dem Fahrzeugreifen (10) und/oder dessen Änderung charakteristisch ist; und
einen zweiten Signalverarbeitungsschritt, bei dem aus dem Deformationssignal (S_D) eine zweite Größe bestimmt wird, die für den Rollwiderstandsbeiwert zwischen dem Fahrzeugreifen (10) und der Fahrbahn und/oder dessen Änderung charakteristisch ist,

**dadurch gekennzeichnet, dass**
vor Durchführung des ersten und des zweiten Signalverarbeitungsschrittes ein Referenzsignal (S_Ref) des Sensors (20) bestimmt wird, wobei die Auswertung des Deformationssignals (S_D) durch die Auswerteeinrichtung die Bestimmung eines Korrelationssignals (S_COR) aus dem Deformationssignal (S_D) und dem Referenzsignal umfasst.

2. Verfahren nach Anspruch 1,
**dadurch gekennzeichnet, dass**
die Bestimmung des Korrelationssignals aus dem Deformationssignal (S_D) und dem Referenzsignal unter Anwendung einer signalangepassten Filterung ("matched filtering") durchgeführt wird.

3. Verfahren nach Anspruch 1 oder 2,
**dadurch gekennzeichnet, dass**
die Auswertung des Deformationssignals (S_D) durch die Auswerteeinrichtung ferner die zeitabhängige Auswertung der Amplitude dieses Korrelationssignals (S_COR) umfasst.

4. Verfahren nach Anspruch 3,
**dadurch gekennzeichnet, dass**
in dem ersten Signalverarbeitungsschritt ein zeitlicher Mittelwert dieser Amplitude bestimmt wird, wobei das Bestimmen dieses zeitlichen Mittelwerts der Amplitude vorzugsweise über eine Mehrzahl von Umdrehungsperioden des Fahrzeugreifens (10) erfolgt

5. Verfahren nach Anspruch 3 oder 4,
**dadurch gekennzeichnet, dass**
in dem zweiten Signalverarbeitungsschritt eine Auswertung von Stufen in der Zeitabhängigkeit der Amplitude des Korrelationssignals (S_COR) erfolgt.

6. Verfahren nach Anspruch 5,
**dadurch gekennzeichnet, dass**
die in dem zweiten Signalverarbeitungsschritt ausgewerteten Stufen während Zeitperioden auftreten, in denen sich der Fahrzeugreifen (10) im Bereich des Abschnitts, in welchem der Sensor (20) angebracht ist, in Kontakt mit der Fahrbahn befindet.

7. Verfahren nach einem der vorhergehenden Ansprüche,
   **dadurch gekennzeichnet, dass**
   als Sensor (20) wenigstens ein Dehnungsmessstreifen verwendet wird.

8. Vorrichtung zur Abschätzung des Betriebszustandes eines Fahrzeugreifens an einem Fahrzeug, mit wenigstens einem in einem Abschnitt des Fahrzeugreifens (10) angebrachten Sensor (20) und einer Auswerteeinrichtung, wobei ein von dem Sensor (20) wiederholt an die Auswerteeinrichtung übermitteltes und von einer Deformation des Fahrzeugreifens (10) abhängiges Deformationssignal (S_D) durch die Auswerteeinrichtung zeitabhängig auswertbar ist,
   **dadurch gekennzeichnet, dass**
   die Auswerteeinrichtung ein signalangepasstes Filter (110) aufweist, welches dazu ausgelegt ist, mittels einer Faltung des Deformationssignals (S_D) mit einem ein Referenzsignal (S_Ref) des Sensors (20) ein Korrelationssignal (S_COR) zu erzeugen.

**Claims**

1. Method for estimating the operating condition of a vehicle tyre on a vehicle, wherein at least one sensor (20) which is mounted in a section of the vehicle tyre (10) repeatedly transmits a deformation signal (S D), dependent on deformation of the vehicle tyre (10), to an evaluation device, and wherein this deformation signal (S_D) is evaluated by the evaluation device as a function of time, wherein the method has:

   a first signal processing step in which a first variable, which is characteristic of the filling pressure in the vehicle tyre (10) and/or the change in said filling pressure, is determined from the deformation signal (S_D); and
   a second signal processing step in which a second variable, which is characteristic of the coefficient of rolling resistance between the vehicle tyre (10) and the underlying surface and/or the change in said coefficient of rolling resistance, is determined from the deformation signal (S_D),

   **characterized in that**
   a reference signal (S _Ref) of the sensor (20) is determined before the first and second signal processing steps are carried out, wherein the evaluation of the deformation signal (S_D) by the evaluation device comprises determining a correlation signal (S_COR) from the deformation signal (S_D) and the reference signal.

2. Method according to Claim 1,
   **characterized in that**
   the correlation signal is determined from the deformation signal (S_D) and the reference signal by applying filtering which is matched to the signals ("matched filtering").

3. Method according to Claim 1 or 2,
   **characterized in that**
   the evaluation of the deformation signal (S_D) by the evaluation device also comprises time-dependent evaluation of the amplitude of this correlation signal (S_COR).

4. Method according to Claim 3,
   **characterized in that**
   a chronological mean value of this amplitude is determined in the first signal processing step, wherein the chronological mean value of the amplitude is preferably determined over a plurality of rotation periods of the vehicle tyre (10) .

5. Method according to Claim 3 or 4,
   **characterized in that**
   stages in the time dependence of the amplitude of the correlation signal (S_COR) are evaluated in the second signal processing step.

6. Method according to Claim 5,
   **characterized in that**
   the stages which are evaluated in the second signal processing step occur during time periods in which the vehicle tyre (10) is in contact with the underlying surface in the region of the section in which the sensor (20) is mounted.

7. Method according to one of the preceding claims,
   **characterized in that**
   at least one strain gauge is used as a sensor (20).

8. Device for estimating the operating condition of a vehicle tyre on a vehicle, having at least one sensor (20) which is mounted in a section of the vehicle tyre (10), and an evaluation device, wherein a deformation signal (S_D) which is repeatedly transmitted to the evaluation device by the sensor (20) and is dependent on deformation of the vehicle tyre (10) can be evaluated as a function of time by the evaluation device,
   **characterized in that**
   the evaluation device has a filter (110) which is matched to the signals and which is configured to generate a correlation signal (S_COR) by folding the deformation signal (S_D) with a reference signal (S_

Ref) of the sensor (20).

**Revendications**

1. Procédé d'évaluation de l'état de fonctionnement d'un pneu de véhicule au niveau d'un véhicule, au moins un capteur (20) disposé dans un segment du pneu de véhicule (10) transmettant un signal de déformation (S_D) dépendant d'une déformation du pneu de véhicule (10) de façon répétée à un dispositif d'analyse et ce signal de déformation (S_D) étant analysé dans le temps par le dispositif d'analyse, le procédé comportant :

une première étape de traitement du signal au cours de laquelle une première grandeur est déterminée à partir du signal de déformation (S_D), ladite grandeur étant caractéristique de la pression de remplissage d'un pneu de véhicule (10) et/ou de toute variation de celle-ci ; et
une seconde étape de traitement du signal au cours de laquelle une seconde grandeur est déterminée à partir du signal de déformation (S_D), ladite grandeur étant caractéristique de la valeur de résistance au roulement entre le pneu de véhicule (10) et la voie de circulation et/ou de toute variation de celle-ci ;

**caractérisé en ce qu'**un signal de référence (S_Ref) du capteur (20) est déterminé avant de réaliser la première et la seconde étape de traitement du signal, l'analyse du signal de déformation (S_D) par le dispositif d'analyse comprenant la détermination d'un signal de corrélation (S_COR) à partir du signal de déformation (S_D) et du signal de référence.

2. Procédé selon la revendication 1, **caractérisé en ce que** la détermination du signal de corrélation est réalisée à partir du signal de déformation (S_D) et du signal de référence en utilisant un filtrage adapté au signal (« matched filtering »).

3. Procédé selon la revendication 1 ou 2, **caractérisé en ce que** l'analyse du signal de déformation (S_D) par le dispositif d'analyse comprend en outre l'analyse dans le temps de l'amplitude de ce signal de corrélation (S_COR).

4. Procédé selon la revendication 3, **caractérisé en ce qu'**une valeur moyenne temporelle de cette amplitude est déterminée lors d'une première étape de traitement du signal, la détermination de cette valeur moyenne temporelle de l'amplitude se produisant de préférence sur une pluralité de périodes de rotation du pneu de véhicule (10).

5. Procédé selon la revendication 3 ou 4, **caractérisé en ce que** lors de la seconde étape de traitement du signal, une analyse des niveaux se produit en fonction de l'amplitude dans le temps du signal de corrélation (S_COR).

6. Procédé selon la revendication 5, **caractérisé en ce que** les seuils analysés lors de la seconde étape de traitement du signal apparaissent pendant des périodes de temps pendant lesquelles le pneu de véhicule (10) se trouve en contact avec la voie de circulation dans la zone du segment dans lequel le capteur (20) est disposé.

7. Procédé selon l'une quelconque des revendications précédentes, **caractérisé en ce que** le capteur (20) utilisé est au moins une bande de mesure de la dilatation.

8. Dispositif d'évaluation de l'état de fonctionnement d'un pneu de véhicule au niveau d'un véhicule, avec au moins un capteur (20) disposé dans un segment du pneu de véhicule (10) et un dispositif d'analyse, un signal de déformation (S_D) dépendant d'une déformation du pneu de véhicule (10) et étant transmis de façon répétée au dispositif d'analyse par un capteur (20) pouvant être analysé par le dispositif d'analyse, **caractérisé en ce que** le dispositif d'analyse comprend un filtre (110) adapté au signal configuré de façon à produire un signal de corrélation (S_COR) à l'aide d'une convolution du signal de déformation (S_D) avec un signal de référence (S_Ref) du capteur (20).

# Fig. 1

## a)

## b)

## c)

## Fig. 2

a)

10

20

x

y

b)

10

20

ω

c)

Deformationssignal,
x-Richtung

ω

d) Deformationssignal,
y-Richtung

ω

Fig. 3

Fig. 4

a)

b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3937966 A1
- DE 4329591 C2
- DE 10329700 A1
- US 20050097949 A1
- US 20040112128 A1
- WO 0108908 A1
- US 20050057346 A1
- US 20040158441 A1
- US 20050075825 A1
- US 5749984 A